# EUROPEAN PATENT APPLICATION

(11) **EP 4 455 680 A1**
(43) Date of publication of application: **30.10.2024**
(21) Application number: 22910805.5
(22) Date of filing: 01.12.2022
(51) Int. Cl.: G01N 35/10

(54) **AUTOMATIC ANALYSIS DEVICE AND CONTROL METHOD FOR SAME**

(30) Priority: 24.12.2021 JP 2021210778
(71) Applicant: HITACHI HIGH-TECH CORPORATION, Tokyo 105-6409 (JP)
(72) Inventor: TANAKA Shinya, Tokyo 105-6409 (JP); FUNAHASHI Ryosuke, Tokyo 105-6409 (JP); NISHIGAKI Kenichi, Tokyo 105-6409 (JP)
(74) Representative: Strehl Schübel-Hopf & Partner
(86) International application number: PCT/JP2022/044310
(87) International publication number: WO 2023/120088

(57) **Abstract**

Provided is an automatic analyzer that is capable of determining a horizontal displacement of a probe by a capacitance type liquid level detection function. The automatic analyzer includes a dispensing mechanism, a capacitance measurement unit, and a control unit. The control unit includes: a liquid level detection unit configured to detect a liquid level of the liquid based on the capacitance measured by the capacitance measurement unit; a peak value calculation unit configured to calculate respective peak values of capacitances caused by a first member and a second member when the dispensing mechanism is driven in the horizontal direction, the first member and the second member being located on one side and the other side of a movement trajectory of the probe and provided at a predetermined interval in a movement direction of the probe; and a position determination unit configured to determine a horizontal position of the probe by comparing a first peak value caused by the first member and a second peak value caused by the second member.

## Description

### Technical Field

The present invention relates to an automatic analyzer and a control method thereof.

### Background Art

An automatic analyzer used in a clinical inspection includes a probe for dispensing a reagent or a sample. To enhance the dispensing accuracy and the cleaning efficiency of the probe, it is necessary to adjust the probe such that the probe stops at the center of a dispensing position or a cleaning position. For example, Patent Literature 1 discloses a technique that detects the displacement of the lowered position of a probe by diverting a capacitance detection mechanism that is provided to an automatic analyzer and is used for performing a liquid level detection function.

### Citation List

### Patent Literature

Patent Literature 1: Japanese Unexamined Patent Application Publication No. 2011-033551

### Summary of Invention

### Technical Problem

However, in the technique described in Patent Literature 1, although the positional displacement of the probe in a height direction can be detected, it is difficult for the technique to detect the positional displacement of the probe in a horizontal direction.
It is an object of the present invention to provide an automatic analyzer that can determine the positional displacement of a probe in a horizontal direction and a control method of the automatic analyzer by making use of a liquid level detection function in a capacitance in the automatic analyzer.

### Solution to Problem

To achieve the above-mentioned object, an automatic analyzer according to the present invention includes: a dispensing mechanism capable of driving a probe that aspirates or discharges a liquid in a horizontal direction and a height direction; a capacitance measurement unit provided on the probe and configured to measure capacitance between the probe and a surrounding; and a control unit configured to control the dispensing mechanism and the capacitance measurement unit, in which the control unit includes: a liquid level detection unit configured to detect a liquid level of the liquid based on the capacitance measured by the capacitance measurement unit; a peak value calculation unit configured to calculate respective peak values of capacitances caused by a first member and a second member when the dispensing mechanism is driven in the horizontal direction, the first member and the second member being located on one side and the other side across a movement trajectory of the probe and provided at a predetermined interval in a movement direction of the probe; and a position determination unit configured to determine a horizontal position of the probe by comparing a first peak value caused by the first member and a second peak value caused by the second member.

In a control method of an automatic analyzer according to the present invention, a control unit includes the steps of: detecting a liquid level of the liquid based on the capacitance measured by the capacitance measurement unit; calculating respective peak values of capacitances caused by a first member and a second member when the dispensing mechanism is driven in the horizontal direction, the first member and the second member being located on one side and the other side across a movement trajectory of the probe and provided at a predetermined interval in a movement direction of the probe; and determining a horizontal position of the probe by comparing a first peak value caused by the first member and a second peak value caused by the second member. Advantageous Effects of Invention

According to the present invention, it is possible to provide an automatic analyzer and a control method thereof that can determine the positional displacement of a probe in a horizontal direction.

### Brief Description of the Drawings

[FIG. 1] FIG. 1 is a perspective view showing an overall configuration of an automatic analyzer.
[FIG. 2] FIG. 2 is a schematic view showing a dispensing mechanism and a determination jig.
[FIG. 3] FIG. 3 is a perspective view showing a structure of the determination jig.
[FIG. 4] FIG. 4 is a top view showing a rotation trajectory of a probe and the determination jig.
[FIG. 5] FIG. 5 is a graph showing a capacitance measured for each movement distance of the probe.
[FIG. 6] FIG. 6 is a functional block diagram of the automatic analyzer.
[FIG. 7] FIG. 7 is a flowchart relating to determination and correction of a position of the probe. Description of Embodiments

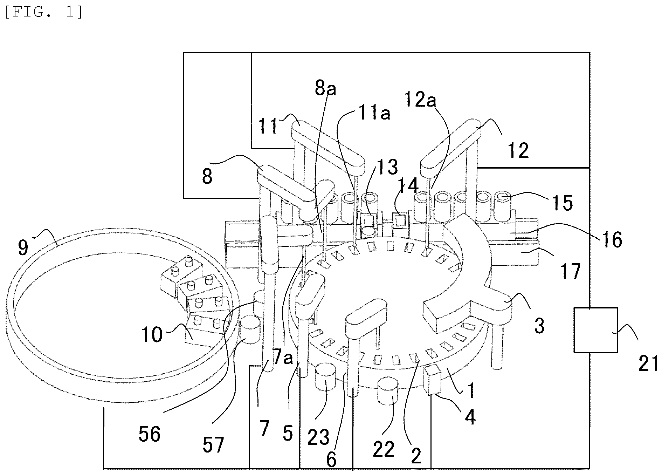

Fig. 1 is a perspective view showing an overall configuration of an automatic analyzer. The automatic analyzer is a device that dispenses a specimen (sample) and a reagent in each of a plurality of reaction containers 2 and causes reactions in the reaction containers 2, and measures liquids obtained caused by reaction. The automatic analyzer includes, a reaction disk (incubator) 1, a reagent disk 9, a sample transport mechanism 17, reagent dispensing mechanisms 7, 8, sample dispensing mechanisms 11, 12, a cleaning mechanism 3, a spectrophotometer 4, stirring mechanisms 5, 6, a cleaning pump (not shown in the drawing), cleaning tanks 13, 14, 22, 23, 56, 57, and a control unit 21. Although omitted in Fig. 1, the automatic analyzer further includes a display unit 51 and an input unit 52.

The reaction containers 2 are arranged on the reaction disk 1 in a circumferential direction. The sample transport mechanism 17 that moves a sample rack 16 on which sample containers 15 (test tubes) are mounted is provided near the reaction disk 1. An inspection sample such as blood is stored in the sample container 15, and the sample container 15 is mounted on the sample rack 16 and is transported by the sample transport mechanism 17. Sample dispensing mechanisms 11, 12 that are rotatable and vertically movable are provided between the reaction disk 1 and the sample transport mechanism 17. The sample dispensing mechanisms 11, 12 include sample probes 11a, 12a, move while drawing an arc about rotary shafts of the sample dispensing mechanisms 11, 12, and dispense samples to the reaction containers 2 from the sample containers 15.

The reagent disk 9 is capable of mounting a plurality of reagent bottles 10 on a circumference thereof. The reagent disk 9 is being kept cool. The reagent dispensing mechanisms 7, 8 are provided between the reaction disk 1 and the reagent disk 9 in a rotatable and vertically movable manner. The reagent dispensing mechanisms 7, 8 include reagent probes 7a, 8a, respectively. The reagent probes 7a, 8a moves while depicting an arc about a rotary shaft, accesses the reagent disk 9, and dispenses a reagent into the reaction container 2 from the reagent bottle 10.

Around the reaction dick 1, the cleaning mechanism 3 that cleans the reaction container 2 after the measurement is performed, stirring mechanisms 5, 6 that perform stirring of a mixed liquid (reaction liquid) of a reagent and sample in the reaction container 2, a light source (not shown in the drawing) that irradiates light to the mixed liquid (reaction liquid) in the reaction container 2, and measures the absorbance of the mixed liquid, and the spectrophotometer 4 are provided. The cleaning tanks 13, 14, 57, 56, 23, 22 are respectively provided on a movable range of the sample dispensing mechanisms 11, 12, the reagent dispensing mechanisms 7, 8, and the stirring mechanisms 5, 6. The respective mechanisms of the automatic analyzer are connected to the control unit 21 via an interface 50 (not shown in the drawing in Fig. 1), are controlled by the control unit 21.

Analysis processing of the inspection sample by the automatic analyzer is, in general, performed in accordance with the following steps. First, a sample in the sample container 15 that is mounted on the sample rack 16 that is transported to a position near the reaction disk by the sample transport mechanism 17 is aspirated by the sample probe 11a of the sample dispensing mechanism 11, and the aspirated sample is discharged to the reaction container 2 on the reaction disk 1. Next, a reagent used for an analysis is aspirated from the reagent bottle 10 on the reagent disk 9 by the reagent probe 7a of the reagent dispensing mechanism 7 or the reagent probe 8a of the reagent dispensing mechanism 8, and is discharged to the reaction container 2 into which the sample is dispensed previously. Subsequently, the mixed liquid of the sample and the reagent in the reaction container 2 is stirred by the stirring mechanism 5.

Then, light irradiated from the light source is made to transmit the reaction container 2 filled with the mixed liquid, and luminosity of transmitted light is measured by the spectrophotometer 4. The luminosity measured by the spectrophotometer 4 is transmitted to the control unit 21 via A/D converter and the interface 50. The control unit 21 performs an arithmetic operation for calculating, for example, the concentration or the like of a predetermined component among analysis items corresponding to a reagent based on absorbance of the mixed liquid (reaction liquid). The obtained measurement result is displayed on the display unit 51 (omitted in Fig. 1). The present invention is described by taking the automatic analyzer as an example, that obtains the concentration of the predetermined component using the spectrophotometer 4. The technique disclosed in the embodiment described later may be also used in an automatic immune analyzer or an automatic coagulation analyzer that measures a specimen using other photometers.

In the above-mentioned configuration, the automatic analyzer has a liquid level detection function of detecting weather or not the probe is brought into contact with a liquid level based on a change in a capacitance of a tip end of the probe. In this embodiment, by diverting a capacitance measurement unit that is provided on the probe for the liquid level detection, it is determined whether or not the probe is positionally displaced in a horizontal direction. Hereinafter, the description is made in detail with respect to a method of correcting the position of the probe that determines the displacement of a movement trajectory of the probe based on a capacitance measured between the determination-use jigs fixedly or detachably mounted on the automatic analyzer, and corrects the position of the probe when necessary.

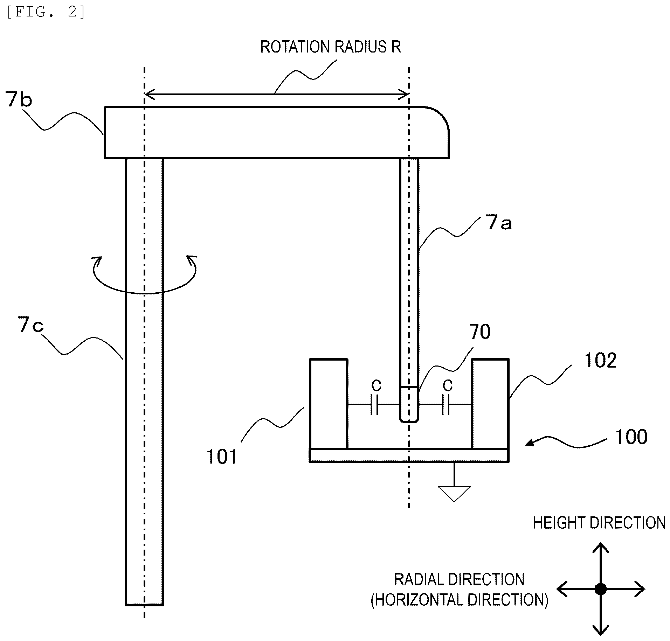

Fig. 2 is a schematic view showing a one-axis dispensing mechanism having a rotation radius R, and a determination-use jig arranged in the automatic analyzer. Hereinafter, the description is made by taking the reagent dispensing mechanism 7 described above as an example. Further, the present invention is equally applicable to other dispensing mechanisms, for example, the sample dispensing mechanisms 11, 12 and the reagent dispensing mechanism 8 described above.

As shown in Fig. 2, the reagent dispensing mechanism 7 includes: the reagent probe 7a that aspirates or discharges a liquid; an arm 7b that supports the reagent probe 7a; and a rotary shaft 7c that can rotate in a horizontal direction and can be displaced in a height direction. The reagent probe 7a is configured to be rotationally moveable in a horizontal plane and is vertically movable in a height direction corresponding to an operation of rotary shaft 7c by the control unit 21. The reagent probe 7a is configured to aspirate and discharge a liquid corresponding to an operation of a syringe not shown in the drawing by the control unit 21. For example, when the reagent probe 7a of the reagent dispensing mechanism 7 rotates and moves to a position above a vertical projection of the reagent bottle 10, the reagent probe 7a is lowered and is immersed in a reagent in the reagent bottle 10, and aspirates the reagent. Next, when the reagent probe 7a of the reagent dispensing mechanism 7 moves to a position above vertical projection of the reaction container 2 by rotation after being elevated, the reagent probe 7a is lowered, and discharges the reagent in the reaction container 2.

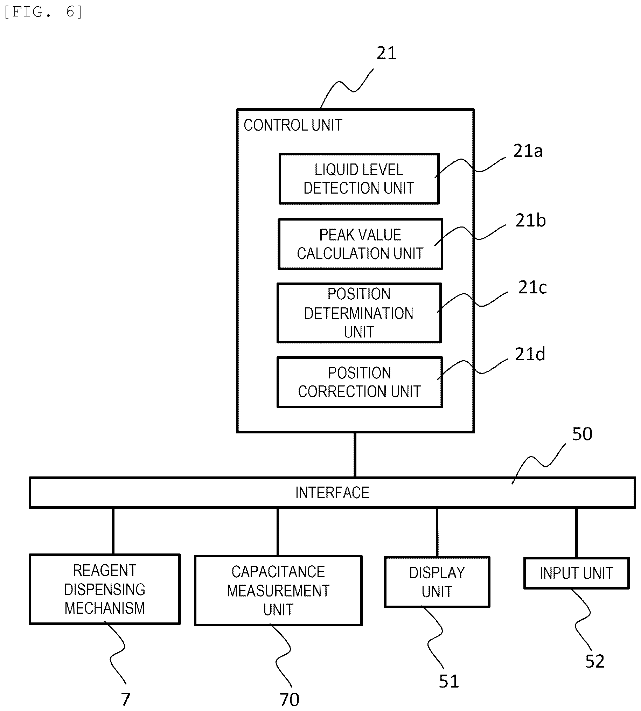

Further, the reagent probe 7a includes a capacitance measurement unit 70 that measures a static capacitance between the reagent probe 7a and the surrounding thereof. The capacitance measurement unit 70 transmits a measured capacitance to the control unit 21 via the interface 50 (see Fig. 6).

Further, in a place that corresponds to a movement trajectory of the reagent probe 7a in a horizontal direction, for example, a cleaning tank 57 that cleans the reagent probe 7a, a determination jig 100 for determining the positional displacement of the reagent probe 7a is provided. The determination jig 100 includes a first member 101 and a second member 102 that are located on one side and the other side across a movement trajectory of the reagent probe 7a. The first member 101 and the second member 102 are formed using a conductive material, and are connected to a GND potential.

The location where the determination jig 100 is provided is not limited to the cleaning tank provided that the location is within a movable range of the probe and is a structure that is not rotatable. For example, in case of the sample probes 11a, 12a, the determination jig 100 can be provided in a thermostatic tank that keeps a temperature of the reaction container 2, a discard hole of the reaction container 2 or the like. Further, the determination jig 100 can be fixed in advance to a structure on the automatic analyzer or may be detachably mounted on the structure. In the case where the determination jig 100 is detachably mounted, for example, the determination jig 100 is attached before the determination of the positional displacement of the reagent probe 7a, and is removed after the determination of the positional displacement of the reagent probe 7a.

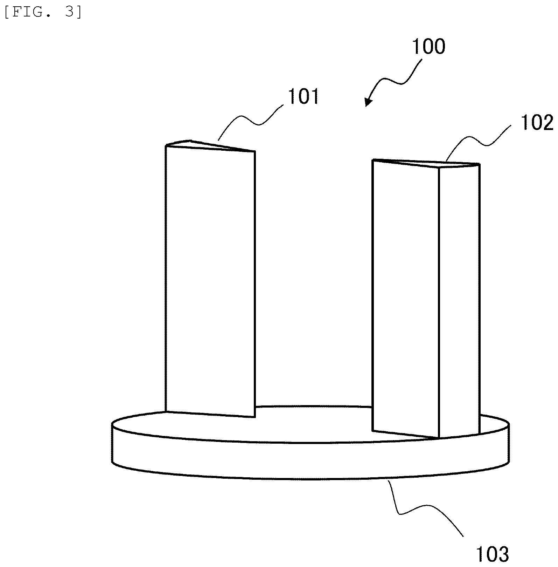

Fig. 3 is a perspective view showing the structure of the determination jig 100. As shown in Fig. 3, the determination jig 100 according to the embodiment is constituted of: a base 103 that forms a bottom surface; and the first member 101 and the second member 102 that are two members protruding upward from the base 103. As described previously, it is desirable that the determination jig 100 is formed using a conductive material. However, the determination jig 100 may be formed using any other materials provided that capacitance changes in response to the presence or the non-presence of the first member 101 and the second member 102. The base 103, the first member 101 and the second member 102 may constitute the determination jig 100 in the form that these parts form an integral body, or may constitute the determination jig 100 in the form that these parts form separate bodies from each other.

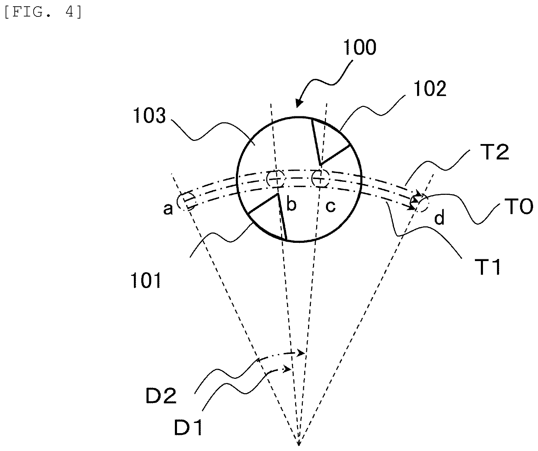

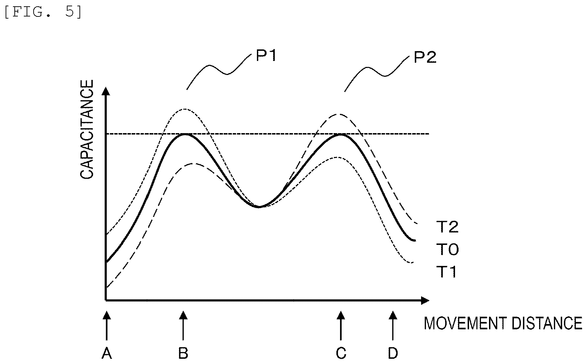

Next, how the movement trajectory and a capacitance change between a case where the reagent probe 7a is positioned normally and a case where the reagent probe 7a is positioned in a displaced manner is described with reference to Fig. 4 and Fig. 5. Fig. 4 is a top view showing a rotation trajectory of the probe, and a determination jig. Fig. 5 is a graph showing capacitance measured for each movement distance of the probe. Respective circumferential direction positions a to d in Fig. 4 correspond to movement distances A to D in Fig. 5.

As shown in Fig. 4, the first member 101 and the second member 102 are provided at a predetermined interval in a movement direction of the reagent probe 7a. With such a configuration, as shown in Fig. 5, with respect to capacitances measured by the capacitance measurement unit 70, two peaks appear along with the movement of the reagent probe 7a. Specifically, when the reagent probe 7a starts its rotation from a circumferential direction position a, the capacitance is gradually increased. When the reagent probe 7a reaches the circumferential direction position b that is a point at which the reagent probe 7a approaches closest to the first member 101, the capacitance takes a first peak value (P1). When the reagent probe 7a further rotates, the capacitance is gradually decreased, thereafter, at an intermediate point between the circumferential direction position b and a circumferential direction position c, the capacitance is started to be increased again. When the reagent probe 7a further rotates and reaches the circumferential direction position c that is a point at which the reagent probe 7a approaches closest to the second member 102, the capacitance takes a second peak value (P2) and, thereafter, the capacitance is gradually decreased. With respect to the movement direction of the reagent probe 7a, when a distance between the first member 101 and the second member 102 is set too short, two peaks overlap with each other and it is difficult to distinguish two peaks from each other. Accordingly, it is desirable that the distance between the center positions of the respective members be 10 mm or more.

The first member 101 is provided on an inner diameter side of the arcuate movement trajectory of the reagent probe 7a, and the second member 102 is provided on an outer diameter side of the arcuate movement trajectory of the reagent probe 7a. In a case where the position of the reagent probe 7a is normal, it is set in advance that the reagent probe 7a passes an intermediate position in the radial direction between an outer diameter side end of the first member 101 and an inner diameter side end of the second member 102. Accordingly, in a case where the reagent probe 7a is provided at the normal position and the movement trajectory takes a trajectory T0 as shown in Fig. 4, the capacitance measured by the capacitance measurement unit 70 takes a waveform indicated by a solid line in Fig. 5. That is, the first peak value (P1) caused by the first member 101 and the second peak value (P2) caused by the second member 102 become substantially the same.

However, in a case where the reagent probe 7a is positionally displaced toward an inner diameter side so that the movement trajectory takes a trajectory expressed by T1 in Fig. 4, the first peak value (P1) becomes larger than the second peak value (P2) as indicated by a dotted line in Fig. 5. On the other hand, in a case where the reagent probe 7a is positionally displaced toward an outer diameter side so that the movement trajectory takes a trajectory expressed by T2 in Fig. 4, the second peak value (P2) becomes larger than the first peak value (P1) as indicated by a broken line in Fig. 5. Accordingly, it is possible to determine the positional displacement of the reagent probe 7a in the radial direction by calculating the first peak value (P1) that appears first and the second peak value (P2) that appears next respectively and by making a comparison which peak value is larger between the first peak value (P1) and the second peak value (P2). In this manner, the positional displacement of the reagent probe 7a is determined by performing a relative comparison between two peak values, the determination accuracy becomes high compared to a case where the determination is performed by comparing either one peak value (absolute value) and a reference value.

Further, it is also possible to determine the positional displacement of the reagent probe 7a in the circumferential direction based on whether a movement amount (rotation angle D1) or a movement time from a rotation start position (the circumferential direction position a in Fig. 4) to the position that corresponds to the first peak value (P1) (the circumferential direction position b in Fig. 4) is within a predetermined range. In the positional displacement determination of the reagent probe 7a in the circumferential direction, a movement amount (rotation angle D2) or a movement time from the rotation start position (the circumferential direction position a in Fig. 4) to the position that corresponds to the second peak value (P2) (the circumferential direction position c in Fig. 4) may be used. The circumferential direction position that becomes the reference is not limited to the rotation start position, and may be other position (for example, the circumferential direction position d in Fig. 4).

In this embodiment, the first member 101 and the second member 102 have a shape of protruding toward the movement trajectory of the reagent probe 7a. Accordingly, when a distance between a tip end of the protruding portion and the reagent probe 7a becomes a shortest distance, capacitance is sharply increased, and when the reagent probe 7a passes the shortest distance position, the capacitance is sharply decreased. As a result, the peak of the capacitance measured by the capacitance measurement unit 70 becomes apparent and hence, the determination accuracy of positional displacement is enhanced.

Fig. 6 is a functional block diagram of the automatic analyzer. In Fig. 6, functions other than calculations relating to the capacitance are omitted.

The control unit 21 is a computer that includes a processor and a memory. As shown in Fig. 6, the control unit 21 includes a liquid level detection unit 21a, a peak value calculation unit 21b, a position determination unit 21c, and a position correction unit 21d. The liquid level detection unit 21a, the peak value calculation unit 21b, the position determination unit 21c, and the position correction unit 21d are functions that are realized by executing programs stored in the memory by the processor.

The liquid level detection unit 21a detects whether or not the probe reaches a liquid level based on a change in capacitance measured by the capacitance measurement unit 70 when the dispensing mechanism is lowered. The peak value calculation unit 21b calculates peak values of capacitances caused by the first member 101 and the second member 102 respectively. The position determination unit 21c determines the position of the probe in the radial direction by comparing the first peak value (P1) and the second peak value (P2). The position determination unit 21c may determines the circumferential direction position of the probe based on whether or not a movement amount or a movement time from the reference position of the probe to the position corresponding to the first peak value (P1) or the second peak value (P2) is within a predetermined range.

To the control unit 21, via the interface 50, the display unit 51 and the input unit 52 are also connected besides a dispensing mechanism (the reagent dispensing mechanism 7 as an example in this embodiment) and the capacitance measurement unit 70. The display unit 51 is a unit that displays an alarm or the like when a result of the position determination is abnormal, and is a display, for example. The input unit 52 is a unit that is used when a user inputs operation information or the like, and is keyboard, for example.

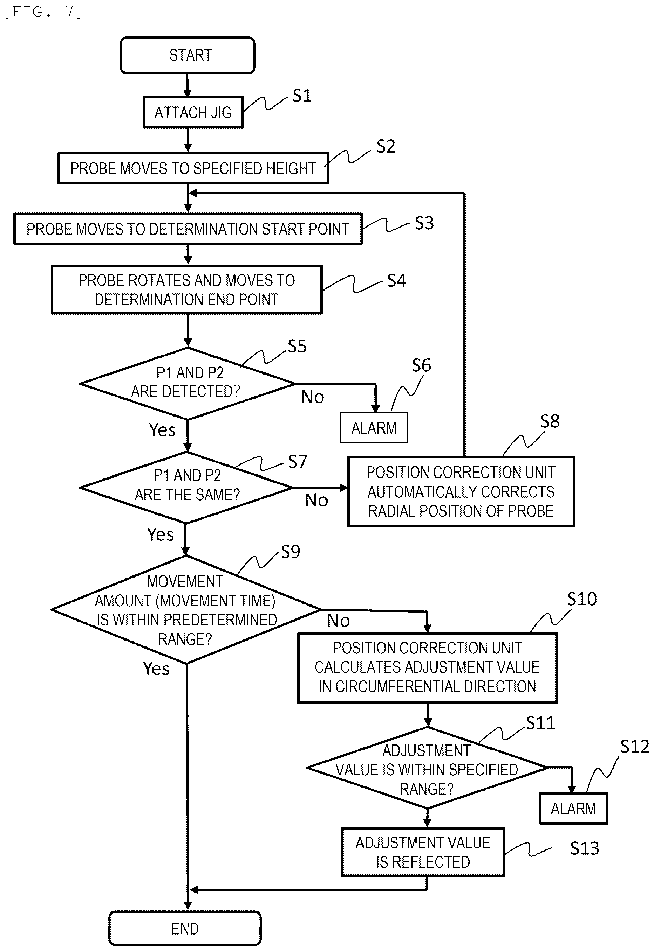

Next, the flow of processing of determining the displacement of the movement trajectory of the probe and correcting the position of the probe is described with reference to Fig. 7. Fig. 7 is a flowchart relating to determination and correction of a position of the probe. Hereinafter, the description is made with respect to an automatic adjustment function that also performs the correction of the position of the probe when it is determined that the positional displacement exists. Also, the processing may be adopted where the automatic analyzer performs steps up to outputting of an alarm or the like based on the determination of the positional displacement of the probe, and an operation in charge of maintenance performs the positional correction of the probe. As timing at which the automatic adjustment function is performed, a point of time that the probe or the thermostatic tank is exchanged, a point of time at which the automatic analyzer is initialized, or a point of time that the maintenance of the automatic analyzer is performed is named.

First, when a maintenance operator operates a button for performing an automatic adjustment function using the input unit 52, the automatic adjustment function starts. Then, the control unit 21 outputs a message to the display unit 51 that prompts attaching of the determination jig 100 to a predetermined place of the automatic analyzer (step S1). In a case where the determination jig 100 is fixed to the cleaning tank 57 or the like of the automatic analyzer in advance, the step S1 is unnecessary.

When the determination jig 100 is mounted and a confirmation button is operated by a maintenance operator, the control unit 21 drives the reagent dispensing mechanism 7 in a height direction so as to move the reagent probe 7a to a predetermined height for positional determination (step S2). Then, the control unit 21 drives the reagent dispensing mechanism 7 in a horizontal direction so that the reagent probe 7a moves to a determination start point (step S3) .

Next, the reagent probe 7a starts its rotation from the determination start point. First, the reagent probe 7a passes a position near the first member 101 and, thereafter, passes a position near the second member 102, and reaches a determination end point (step S4). At this point of time, the peak value calculation unit 21b of the control unit 21 calculates the first peak value (P1) and the second peak value (P2), and calculates a movement amount or the movement time from the determination start point to the position that corresponds to the first peak value (P1) (step S5).

In a case where the peak values, the movement amount or the movement time cannot be calculated in step S5, an alarm or the like that prompts the confirmation whether the determination jig 100 is accurately mounted is outputted via the display unit 51 (step S6). On the other hand, in a case where the peak values and the like are calculated in step S5, the position determination unit 21c determines whether or not the first peak value (P1) and the second peak value (P2) are substantially the same (step S7).

In a case where it is determined that the first peak value (P1) and the second peak value (P2) are not the same in step S7, the reagent probe 7a is positionally displaced in a radial direction. That is, the position determination unit 21c determines that the reagent probe 7a is displaced toward an inner diameter side in a case where P1 is larger than P2, and determines that the reagent probe 7a is displaced toward an outer diameter side in a case where P2 is larger than P1. The position correction unit 21d corrects a position of the reagent probe 7a in a radial direction corresponding to a determination result of the reagent probe 7a made by the position determination unit 21c (step S8). In a case where the reagent dispensing mechanism 7 does not include an actuator that can move the reagent probe 7a in the radial direction, a message that prompts a maintenance user to perform the positional correction may be outputted via the display unit 51. When the position correction is completed, the processing returns to the step S4. On the other hand, in a case where it is determined that P1 and P2 are the same in step S7, the position of the reagent probe 7a in a radial direction is normal. Accordingly, in this case, the determination of the position of the reagent probe 7a in a circumferential direction is made. In such determination, the position determination unit 21c determines whether or not the movement amount or the movement time calculated in step S6 is within a predetermined range (step S9).

In a case where it is determined that the movement amount or the movement time calculated in step S6 is not within the predetermined range in step S9, the reagent probe 7a is positionally displaced in the circumferential direction. Accordingly, the position correction unit 21d calculates a differential from a designed value as an adjustment value in the circumferential direction (step S10). Next, the position correction unit 21d determines whether or not the adjustment value is within a specified range (step S11) .

In a case where the adjustment value is not within the specified range in step S11, an alarm is outputted via the display unit 51 (step S12). On the other hand, in step S11, in a case where it is determined that the adjustment value is within the specified range, the adjustment value is reflected on the automatic analyzer (step S13), and the automatic adjustment function is finished.

As has been described heretofore, in this embodiment, the positional displacement of the probe in the radial direction and in the circumferential direction is determined and the position is corrected when necessary. Accordingly, an operation of performing aspirating or discharging a liquid at an appropriate probe position is guaranteed and hence, the reliability of the automatic analyzer is enhanced.

The present invention is not limited to the above-mentioned embodiment, and various modifications are conceivable. For example, in the above-mentioned embodiment, the probe draws an arcuate trajectory by the rotation of the dispensing mechanism having one shaft. However, provided that the dispensing mechanism can be driven in the horizontal direction, the dispending mechanism may be of a type where the probe rotates about a plurality of shafts or of a type where the probe moves linearly.

Particularly, the following modifications are considered with respect to the determination jig 100.

For example, the first member 101 and the second member 102 are not limited to a horizontal cross-sectional shape as shown in Fig. 4, and the first member 101 and the second member 102 may have a circular horizontal cross-sectional shape or a polygonal horizontal cross-sectional shape. With respect to the first member 101 and the second member 102, a profile (inclination) in a height direction of a portion that faces the movement trajectory may be set so as to follow a profile (inclination) in a height direction of the capacitance measurement unit 70 at the tip end of the probe. With such a configuration, an increase range of capacitance when each member and the probe are made to approach each other can enlarged and hence, an S/N ratio may be enhanced.

Further, the first member 101 and the second member 102 may be formed in a recessed shape with respect to the base 103 instead of forming the first member 101 and the second member 102 in a protruding shape with respect to the base 103 as shown in Fig. 3. In this case, when the probe approaches the first member and the second member, the capacitance is decreased. Accordingly, the position of the probe can be determined by calculating minimum values of the capacitances caused by the respective members.

The members attached to the determination jig 100 are not limited to two members consisting of the first member and the second member, and may be three or more members. In a case where the positional displacement of the probe in the radial direction is not determined and only the positional displacement of the probe in the circumferential direction is determined, it is unnecessary for the determination jig 100 to have a plurality of members that are formed in a protruding shape or a recessed shape. It is sufficient for the determination jig 100 to have only a single member formed in a protruding shape or a recessed shape following the movement trajectory of the probe.

### List of Reference Signs

2: reaction container
3: cleaning mechanism
4: spectrophotometer
5, 6: stirring mechanism
7, 8: reagent dispensing mechanism
7a, 8a: reagent probe
9: reagent disk
10: reagent bottle
11, 12: sample dispensing mechanism
11a, 12a: sample probe
13, 14, 22, 23, 56, 57: cleaning tank
15: sample container
16: sample rack
17: sample transport mechanism
21: control unit
21a: liquid level detection unit
21b: peak value calculation unit
21c: position determination unit
21d: position correction unit
50: interface
51: display unit
52: input unit
70: capacitance measurement unit
100: determination jig
101: first member
102: second member
103: base

## Claims

1. An automatic analyzer comprising:
a dispensing mechanism capable of driving a probe that aspirates or discharges a liquid in a horizontal direction and a height direction;
a capacitance measurement unit provided on the probe and configured to measure a capacitance between the probe and a surrounding; and
a control unit configured to control the dispensing mechanism and the capacitance measurement unit, wherein
the control unit includes:
a liquid level detection unit configured to detect a liquid level of the liquid based on the capacitance measured by the capacitance measurement unit;
a peak value calculation unit configured to calculate respective peak values of capacitances caused by a first member and a second member when the dispensing mechanism is driven in the horizontal direction, the first member and the second member being located on one side and the other side across a movement trajectory of the probe and provided at a predetermined interval in a movement direction of the probe; and
a position determination unit configured to determine a horizontal position of the probe by comparing a first peak value caused by the first member and a second peak value caused by the second member.

2. The automatic analyzer according to claim 1, wherein
the first member is provided on an inner diameter side of the circular movement trajectory of the probe, and the second member is provided on an outer diameter side of the circular movement trajectory of the probe, and
the position determination unit determines that the probe is displaced toward the inner diameter side when the first peak value is larger than the second peak value, and determines that the probe is displaced toward the outer diameter side when the second peak value is larger than the first peak value.

3. The automatic analyzer according to claim 2, wherein
the position determination unit determines that the probe is displaced in a circumferential direction when a movement amount or movement time for the probe to reach a position corresponding to the first peak value or the second peak value from a reference position is out of a predetermined range.

4. The automatic analyzer according to claim 3, wherein
the control unit further includes a position correction unit configured to correct a position of the probe when a displacement of the probe is determined.

5. The automatic analyzer according to claim 2, wherein
the first member and the second member have a shape of protruding toward the movement trajectory of the probe.

6. The automatic analyzer according to claim 1, wherein
the first member and the second member are attached before the determination of the horizontal position of the probe, and are removed after the determination of the horizontal position of the probe.

7. The automatic analyzer according to claim 1, further comprising:
a cleaning tank configured to clean the probe, wherein
the first member and the second member are fixed to the cleaning tank.

8. An automatic analyzer comprising:
a dispensing mechanism capable of driving a probe that aspirates or discharges a liquid in a horizontal direction and a height direction;
a capacitance measurement unit provided on the probe and configured to measure a capacitance between the probe and a surrounding; and
a control unit configured to control the dispensing mechanism and the capacitance measurement unit, wherein
the control unit includes:
a liquid level detection unit configured to detect a liquid level of the liquid based on the capacitance measured by the capacitance measurement unit;
a peak value calculation unit configured to calculate a peak value of a capacitance caused by a member provided along a movement trajectory of the probe when the dispensing mechanism is driven in the horizontal direction; and
a position determination unit configured to determine that the probe is displaced in a circumferential direction when a movement amount or movement time for the probe to reach a position corresponding to the peak value from a reference position is out of a predetermined range.

9. A control method of an automatic analyzer, the automatic analyzer including a dispensing mechanism capable of driving a probe that aspirates or discharges a liquid in a horizontal direction and a height direction, a capacitance measurement unit provided on the probe and configured to measure a capacitance between the probe and a surrounding, and a control unit configured to control the dispensing mechanism and the capacitance measurement unit, the method causing the control unit to:
detect a liquid level of the liquid based on the capacitance measured by the capacitance measurement unit;
calculate respective peak values of capacitances caused by a first member and a second member when the dispensing mechanism is driven in the horizontal direction, the first member and the second member being located on one side and the other side across a movement trajectory of the probe and provided at a predetermined interval in a movement direction of the probe; and
determine a horizontal position of the probe by comparing a first peak value caused by the first member and a second peak value caused by the second member.

## Amended claims

### Amended claims under Art. 19.1 PCT

1. An automatic analyzer comprising:
a dispensing mechanism capable of driving a probe that aspirates or discharges a liquid in a horizontal direction and a height direction;
a capacitance measurement unit provided on the probe and configured to measure a capacitance between the probe and a surrounding; and
a control unit configured to control the dispensing mechanism and the capacitance measurement unit, wherein
the control unit includes:
a liquid level detection unit configured to detect a liquid level of the liquid based on the capacitance measured by the capacitance measurement unit;
a peak value calculation unit configured to calculate respective peak values of capacitances caused by a first member and a second member when the dispensing mechanism is driven in the horizontal direction, the first member and the second member being located on one side and the other side across a movement trajectory of the probe and provided at a predetermined interval in a movement direction of the probe; and
a position determination unit configured to determine a horizontal position of the probe by comparing a first peak value caused by the first member and a second peak value caused by the second member.

2. The automatic analyzer according to claim 1, wherein
the first member is provided on an inner diameter side of the circular movement trajectory of the probe, and the second member is provided on an outer diameter side of the circular movement trajectory of the probe, and
the position determination unit determines that the probe is displaced toward the inner diameter side when the first peak value is larger than the second peak value, and determines that the probe is displaced toward the outer diameter side when the second peak value is larger than the first peak value.

3. The automatic analyzer according to claim 2, wherein
the position determination unit determines that the probe is displaced in a circumferential direction when a movement amount or movement time for the probe to reach a position corresponding to the first peak value or the second peak value from a reference position is out of a predetermined range.

4. The automatic analyzer according to claim 3, wherein
the control unit further includes a position correction unit configured to correct a position of the probe when a displacement of the probe is determined.

5. The automatic analyzer according to claim 2, wherein
the first member and the second member have a shape of protruding toward the movement trajectory of the probe.

6. The automatic analyzer according to claim 1, wherein
the first member and the second member are attached before the determination of the horizontal position of the probe, and are removed after the determination of the horizontal position of the probe.

7. The automatic analyzer according to claim 1, further comprising:
a cleaning tank configured to clean the probe, wherein
the first member and the second member are fixed to the cleaning tank.

8. (Deleted)

9. A control method of an automatic analyzer, the automatic analyzer including a dispensing mechanism capable of driving a probe that aspirates or discharges a liquid in a horizontal direction and a height direction, a capacitance measurement unit provided on the probe and configured to measure a capacitance between the probe and a surrounding, and a control unit configured to control the dispensing mechanism and the capacitance measurement unit, the method causing the control unit to:
detect a liquid level of the liquid based on the capacitance measured by the capacitance measurement unit;
calculate respective peak values of capacitances caused by a first member and a second member when the dispensing mechanism is driven in the horizontal direction, the first member and the second member being located on one side and the other side across a movement trajectory of the probe and provided at a predetermined interval in a movement direction of the probe; and
determine a horizontal position of the probe by comparing a first peak value caused by the first member and a second peak value caused by the second member.

Statement under Art. 19.1 PCT
1. Claim 8 is deleted.
